# EUROPEAN PATENT SPECIFICATION

(11) **EP 2 807 082 B1**
(45) Date of publication and mention of the grant of the patent: **01.08.2018**
(21) Application number: 13741541.0
(22) Date of filing: 24.01.2013
(51) Int. Cl.: B29C 49/22

(54) **EXTRUDED PET PARISON AND MANUFACTURED CONTAINER**
EXTRUDIERTER PET-VORFORMLING UND HERGESTELLTER BEHÄLTER
PARAISON EN PET EXTRUDÉ ET RÉCIPIENT REALISÉ

(30) Priority: 25.01.2012 US 201261590652 P
(43) Date of publication of application: 03.12.2014
(73) Proprietor: Plastipak Packaging, Inc., Plymouth, MI 48170 (US)
(72) Inventor: YOUNG, William, C., Ypsilanti, MI 48197 (US); HOLT, Harvey, Shannon, Botkins, OH 45306 (US); MOSS, Gates, Cincinnati, OH 45242 (US); KITZMILLER, Michael, C., Fort Loramie, OH 45845 (US)
(74) Representative: Patentanwälte und Rechtsanwalt Weiß, Arat & Partner mbB
(86) International application number: PCT/US2013/022992
(87) International publication number: WO 2013/112736

(56) References cited:
- EP-A1- 1 833 886
- EP-A1- 1 852 467
- EP-A1- 2 163 369
- WO-A1-99/65989
- US-A- 4 340 721
- US-A- 5 289 921
- US-A- 5 444 144
- US-A1- 2002 061 371
- US-A1- 2005 118 406
- US-A1- 2006 275 569
- US-A1- 2007 054 106
- US-A1- 2008 093 777
- US-A1- 2010 201 015
- US-A1- 2010 201 015
- US-B1- 7 150 371

## Description

### TECHNICAL FIELD

The present disclosure relates generally to extrusion blow molding (EBM) methods and systems capable of utilizing injection stretch blow molding (ISBM) grade polyethylene terephthalate (PET) to produce articles including bottles and containers.

### BACKGROUND

Polymer resins, including PET, are commonly employed in the plastic packaging industry. Because of its favorable processing properties, and because PET is considered recycling-friendly, PET is widely used to produce numerous types of bottles and containers (which may herein be collectively referred to as simply "containers"). In the bottle industry, for example, bottle-grade PET usually has a resin intrinsic viscosity (IV) of about 0.65 to 0.87 dL/g, and is commonly used in connection with ISBM processing.

Extrudable PET-type compositions or formulations (e.g., extrudable PET-type co-polymers) are also known in the packaging industry. Without limitation, general parison extrusion teachings are provided in U.S. Patent Nos. 3,919,375 and 4,828,786. For PET to be suitable for EBM processes, a higher molecular weight PET, i.e., one having a higher IV (e.g., 1.0 dL/g or greater) and chain extenders may be needed. However, such co-polymers are commonly amorphous, or slow-crystallizing, which can present certain conversion and reclamation challenges. While a slow-crystallizing co-polymer may allow for easier processing in EBM environments, the resulting container can, among other things, present recyclability challenges. For instance, when the material has not yet crystallized, and remains amorphous, the amorphous co-polymer tends to soften and form agglomerates, typically at around 80°C. Further, when amorphous or slow crystallizing resins are added to the PET recycling stream, the resins can cause, *inter alia,* unwanted sticking, thermal agglomeration, and bridging (or port plugging) issues. Such issues can make such PET polymer resins unsuitable for conventional recycling programs and processes.

Moreover, if a bottle grade PET and an extrudable PET composition are blended or combined, so as to be provided in the form of branched PET co-polymers, the resulting combination of resins may not exhibit performance characteristics that are sufficiently desirable. That is generally from a recycling standpoint, the higher percentage of extrusion-grade PET, the more undesirable the characteristics of the resulting product.

The use of standard ISBM-grade PET in the extrusion context might help to address some the aforementioned recyclability issues. However, for reasons such as noted above, such resins have generally not been successfully commercialized because of a number of challenges. Such resins typically have a low IV, i.e., commonly from about 0.65 to 0.87. As a result, they tend not to have sufficient melt strength and/or the resins may extrude too quickly to form a desired capturable parison. Additionally, with some articles, a lower IV may provide less container strength, more susceptibility to stress fractures or cracks, and increased container haze.

Consequently, there remains a desire for an EBM method and system to produce commercially acceptable and bottles and/or containers that are compatible with the recycling stream from extrusion-grade PET compositions or formulations.

The WO 99/65989 A1, disclosing an extruded parison according to the preamble of claim 1, relates to polyester compositions that possess improved gas barrier properties. These novel polyester blends comprise repeat units of phenylenedi (oxyacetic acid). Such polyesters with improved gas barrier properties are useful in packaging applications where low gas permeability are required for protection or preservation of the contents.

The US 7,150,371 B1 provides an extrusion blow molded container comprising a closed base, a body portion extending from the closed base having a surface finish that is substantially free of striations, and an open neck portion extending from the body portion. In an embodiment, the container is comprised of polyethylene terephthalate (PET); the base portion includes a support portion and a substantially elevated portion having a center and a major diameter; and the center is disposed an elevated distance above said surface that is less than about 0.05 the major diameter. A method and apparatus for extrusion blow molding an article is also disclosed.

The EP 1 852 467 A1 relates to a barrier layer consisting of a composition comprising a blend of (i) a polyester resin, (ii) a polyamide material and optionally (iii) an oxygen scavenging material.

The US 5,444,144 A relates to a process for producing polyethylene terephthalate (hereinafter referred to as "PET") useful for molding bottles, films and sheets. More particularly, it relates to a process for producing PET whereby contamination of a mold scarcely occurs during its molding and the aldehyde content of the molded product will be little.

The US 4,340,721 A relates to improved saturated polyesters comprising ethylene glycol terephthalate recurring units, and to containers shaped therefrom useful for the packaging of foodstuffs and beverages. It also relates to a process for the preparation of such improved polyesters.

The US 2010/0201015 provides a method of producing a polyethylene terephthalate graft copolymerized resin, comprising subjecting the following mixture to a homogeneous reaction at a temperature of 250 DEG C or higher to impart a high melt viscosity to the mixture.

### SUMMARY

The present invention relates to an extruded parison in accordance with claim 1. The co-extruded parison may be subsequently blow molded to form a container as claimed in claim 4.

In an embodiment, a first extruded polymer (i.e., a higher IV polymer) comprises PET having an IV of from 0.96 or greater. If desired, the first extruded polymer may have an IV from about 1.0 to 1.4, and is created by solid-stating standard bottle grade PET and may be devoid of chain extenders. A second extruded polymer (i.e., a lower IV polymer) also comprise PET, and has an IV of less than 0.85. Additionally, the second extruded polymer may further comprise post-consumer recycled (PCR) PET and regrind PET, and/or may optionally include a colorant and/or a barrier.

In other embodiments, the extrusion polymer being used may comprise a blend. For example, an extruded PET may comprise a blend - such as a blend of higher IV PET (e.g., 0.96 or higher) and a lower IV PET (e.g., between 0.80 and 0.85). The blend would not require chain extenders and, if desired, may itself be co-extruded. Additionally, for some embodiments, the higher IV polymer material may start as a lower IV polymer material and may have its IV raised, for instance, via a solid-stating process.

### BRIEF DESCRIPTION OF THE DRAWINGS

Embodiments of the invention will now be described, by way of example, with reference to the accompanying drawings, wherein:

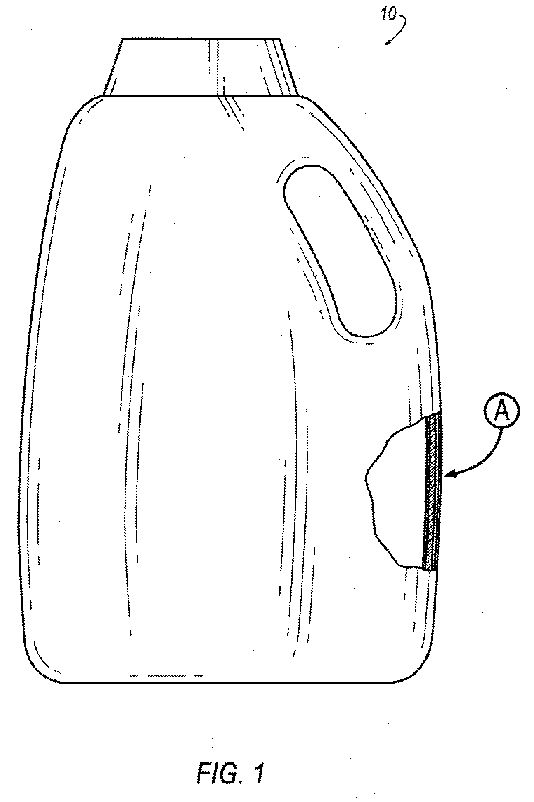

FIG. 1 illustrates a partially broken away view that generally illustrates an embodiment of a multi-layer extrusion blow molded container;

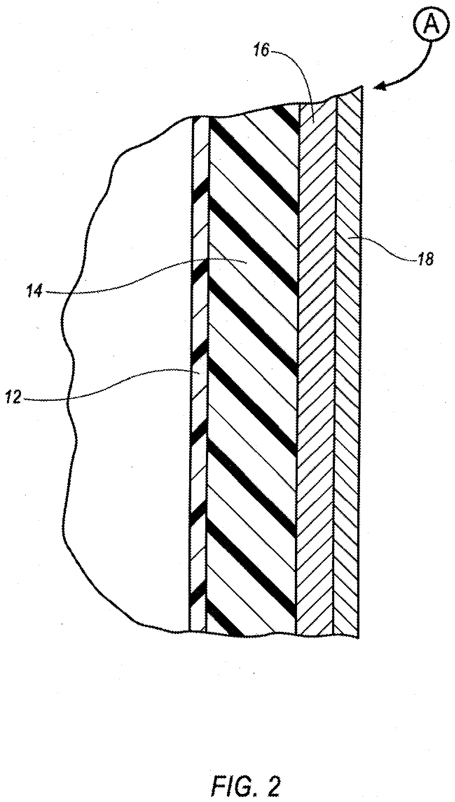

FIG. 2 is a partial sectional view that generally illustrates a wall of the molded container;

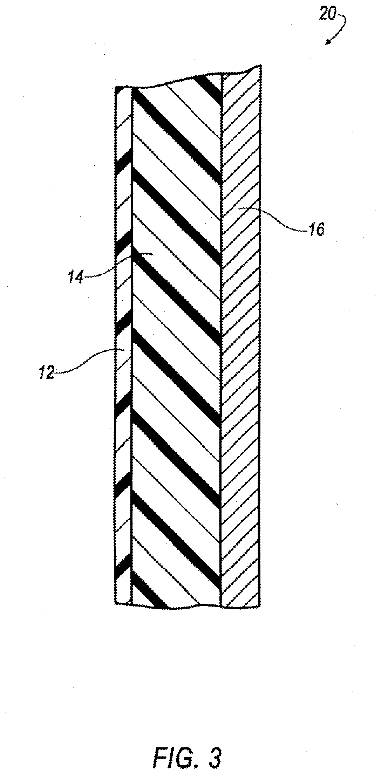

FIG. 3 is a partial sectional view of a wall of an embodiment of an intermediate article;

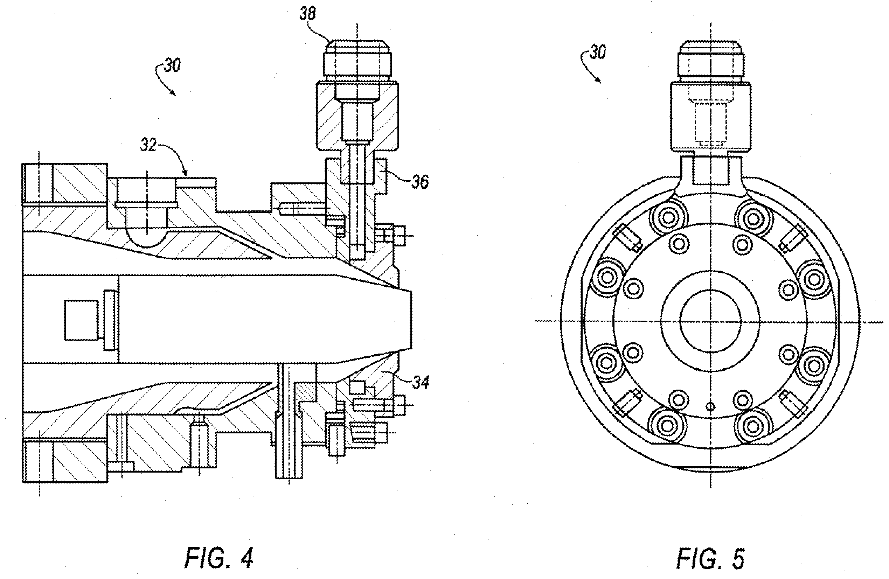

FIGS. 4 and 5 generally illustrate an embodiment of a flow head and a die bushing assembly that may be employed to form a parison according to an embodiment; and

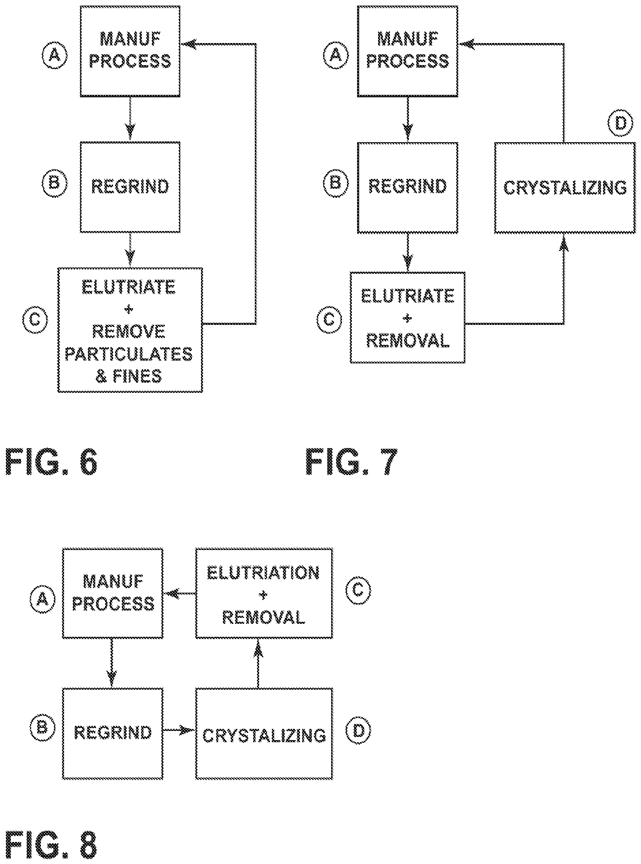

FIGS. 6-8 are flowcharts generally illustrating processes according to embodiments of the disclosure.

Additional descriptions and information are provided in connection with U.S. Patent Application Serial No. 12/877,573, filed Sep. 8, 2010.

### DETAILED DESCRIPTION

Reference will now be made in detail to embodiments of the present invention, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the scope of the invention as defined by the appended claims.

In an embodiment of the present disclosure, a method is provided in which two or more polymers are co-extruded to form a parison that can be subsequently blown into a bottle or container. In an embodiment, two separate polymers may be provided. A first polymer may comprise PET and may have a comparatively higher IV - e.g., 0.96 or greater (or, for instance, from about 1.0 to about 1.4). The first polymer may, for example and without limitation, be created by solid-stating standard bottle grade PET and may be devoid of chain extenders. A second polymer may also comprise PET and may have a comparatively lower IV - for instance, less than about 0.87 (or, for example, from about 0.8 to about 0.87). The second polymer, i.e., having a comparatively lower IV, may comprise post-consumer recycled (PCR) PET and/or regrind PET. Moreover, for some embodiments, the second polymer may additionally include one or more colorants.

It is noted that regrind PET generally differs from PCR PET in that regrind material has not been distributed to the consumer through an article's normal life cycle. For example, regrind material may be material that did not form a part of the article and is simply captured at the manufacturing site.

In an embodiment, the first polymer may be provided with an IV of, for example, about 0.97, while a second polymer may have an IV of, for example, 0.76. The layer with the comparatively higher IV can serve to handle higher melt temperatures and provide strength, and can additionally help to prevent migration.

In embodiments of a method and system, the first (higher IV) and second (lower IV) polymers may be extruded and combined - e.g., via an extrusion head - to form a single parison having multiple (e.g., two) layers. In an embodiment, the cross-sectional thickness (along the sidewall and perpendicular to the centerline of the parison) of the higher-IV layer may be about 20% (0.20) of the total parison thickness, and the thickness of the lower-IV layer may be about 80% (0.80) of the total parison thickness. Further, depending on the desired content of the resulting bottle or container, the higher-IV layer and the lower-IV layer may be interchanged with respect to which layer is the inner co-extruded layer and which layer is the outer co-extruded layer.

Embodiments of bottles and containers produced in accordance with the present disclosure may comprise crystalline PET, may exhibit commercially acceptable clarity, and may be fully recyclable in the standard PET recycling stream (i.e., marked as "No. 1").

In embodiments, an extrudable PET - that is not solid-stated - may have a "composite" IV of about 0.96, or less. Such a configuration may be desirable for processes that involve downward extrusion. The invention is not, however, limited to equipment that extrudes in the direction of gravity, and other known techniques may be employed.

Further, the disclosed method and system may be applied to parisons formed in one co-extruded layer, or in multi-layer embodiments that have two or more extruded layers. Moreover, in embodiments, one layer may serve as a carrier layer, while the other layer(s) may impart one or more other structures or features. Such other structures or features may include the use of PCR, coloring (e.g., an outside color), or cost optimization (e.g., inclusion of a comparatively less expensive ("filler") middle layer). Without limitation, in an embodiment a comparatively high-IV polymer may serve as a skeleton, while another layer may include as much as 28% or more PCR. Further without limitation, some embodiments of resulting bottles or containers may comprise a PCR content of between about 10% to 50% by weight, In other embodiments, the PCR content may be in the nature of about 20% to 30% by weight. Moreover, if desired, a junk layer of 80% or more (even up to 100%) PCR may additionally be included.

Embodiments of the present disclosure may not depend upon chain extenders, and may not comprise combinations of amorphous and solid state resins. That is, for instance, the extrudable polymers can be provided in a solid state condition, and may not be amorphous.

With some embodiments, the extrusion polymer may comprise a blend. For example, an extruded PET may comprise a blend - such as a blend of higher IV PET (e.g., 0.96 or higher) and a lower IV PET (e.g., between 0.80 and 0.85). In an embodiment, the blend does not include chain extenders and, if desired, the blend itself may be co-extruded. Further, for some embodiments, the higher IV polymer material may start as a lower IV polymer material that has its IV raised, for instance, via a solid-stating process.

To help minimize material losses, regrind materials are commonly recaptured at a manufacturing site. A manufacturer often would like to re-incorporate regrind materials into the process. The amount of regrind material to be re-introduced can depend upon requirements and various process needs. However, with conventional extrusion PET, in some cases an over-extensive use of regrind can involve undesirable effects concerning container quality. Such issues may involve streaking, reduced clarity, "unmelts" (resin pieces that have not fully melted), etc. To address some or all of the foregoing issues, a manufacturer may elutriate the regrind material prior to reincorporating it into the polymer material being extruded. An elutriation process, including such processes known in the art, can remove particulate matter or "fines" from the regrind material. Such fines can cause or exacerbate some of the aforementioned issues. While some past processes have been known to crystallize resins to "toughen" them up before being processed in a dryer, the present disclosure teaches, inter alia, the elutriation of regrind material prior to its reuse in extrusion manufacturing, including extrusion PET manufacturing. Because non-elutriated regrind material that has been crystallized may still include fines, an elutriation process can remove such fines. It is noted that if employed, crystallization can occur before or after elutriation. However, for many applications, crystallizing after elutriation may be preferable, and may provide better results.

With elutriation, there can be some amount of weight of material that is lost. With some embodiments of the concept, it is anticipated that less then 1.5% by weight of material will be lost in connection with elutriation. For some embodiments, amount of loss may be kept within a target range of 0.1 to 1.5 percent by weight.

A potential benefit of a dual layer is the ability to utilize a carrier resin. It is also possible to color one or both layers to provide different visual effects, whether the layer or layers are colored alone or in various combinations. The combination of two or more layers, with each layer having its own color, haze, and other visual qualities, can further enhance container decoration and visual appeal. Further, if permeation is a potential issue, one or more barrier layers may be employed in connection with one or more layers of the parison/article.

Parisons associated with the disclosed concept may be processed utilizing various forms of known processing techniques and equipment. For some embodiments, a "shuttle"-type system may be used. With shuttle-type equipment a head with multiple outlets may provide at least one parison at a common spot and a mold or molds can be moved, or shuttled, in position under the parison. Such a system may work well if space is an issue and/or if production will be more "on demand" with less concern about high capacity and speed. Alternatively, various known rotary or "wheel" extrusion techniques may be employed where a more "continuous" process, with potentially higher speed and output, is desirable.

The foregoing descriptions of specific embodiments of the present invention have been presented for purposes of illustration and description. They are not intended to be exhaustive or to limit the invention to the precise forms disclosed, and various modifications and variations are possible in light of the above teaching. The embodiments were chosen and described in order to explain the principles of the invention and its practical application, to thereby enable others skilled in the art to utilize the invention and various embodiments with various modifications as are suited to the particular use contemplated. It is intended that the scope of the invention be defined by the claims. The second extruded polymer has an intrinsic viscosity of about 0.80 to about 0.85. The cross-sectional thickness of the first extruded polymer is at least about 0.20 of the total parison thickness. The cross-sectional thickness of the second extruded polymer is less than about 0.80 of the total parison thickness. The one or more additional extruded polymer layers comprise recycled or reground material. The lower IV polymer has an IV between about 0.80 and about 0.85.

## Claims

1. An extruded PET parison comprising:
- a first extruded polymer comprising PET; and
- a second extruded polymer comprising PET;
- wherein the first and second polymers are co-extruded and the first and second extruded polymers are in a solid state,
**characterized in that**
- the first extruded polymer has an intrinsic viscosity that is higher that the intrinsic viscosity of the second extruded polymer, wherein the first extruded polymer has an intrinsic viscosity of at least 0.96 and wherein the second extruded polymer has an intrinsic viscosity of less than 0.85.

2. The parison of claim 1, wherein the second extruded polymer comprises post-consumer recycled (PCR) PET or regrind PET.

3. The parison of claim 1, including one or more additional extruded polymer layers.

4. A recyclable plastic container formed from the parison of claim 1, comprising:
a base portion;
a sidewall portion projecting upwardly from the base portion; and
a neck portion projecting upwardly from the sidewall portion;
wherein the base portion, sidewall portion, and neck portion further comprise at least a first extruded polymer comprising solid state PET.

5. A plastic container according to claim 4, wherein the container further comprises a second extruded polymer comprising solid state PET, and wherein the first extruded polymer has an intrinsic viscosity that is higher that the intrinsic viscosity of the second extruded polymer.

## Patentansprüche

1. Extrudierter PET-Vorformling, umfassend:
- ein erstes extrudiertes Polymer, umfassend PET; und
- ein zweites extrudiertes Polymer, umfassend PET;
- wobei das erste und das zweite Polymer coextrudiert sind und das erste und das zweite extrudierte Polymer in einem festen Zustand vorliegen,
**dadurch gekennzeichnet, dass**
- das erste extrudierte Polymer eine Grenzviskosität aufweist, die höher ist als die Grenzviskosität des zweiten extrudierten Polymers, wobei das erste extrudierte Polymer eine Grenzviskosität von mindestens 0,96 und das zweite extrudierte Polymer eine Grenzviskosität von weniger als 0,85 aufweist.

2. Vorformling nach Anspruch 1, wobei das zweite extrudierte Polymer post-Consumer recyceltes (PCR) PET oder Mahlgut-PET umfasst.

3. Vorformling nach Anspruch 1, umfassend eine oder mehrere zusätzliche extrudierte Polymerschichten.

4. Wiederverwertbarer Kunststoffbehälter, der aus dem Vorformling nach Anspruch 1 gebildet ist, umfassend:
einen Basisabschnitt;
einen Seitenwandabschnitt, der von dem Basisabschnitt nach oben vorsteht; und
einen Halsabschnitt, der von dem Seitenwandabschnitt nach oben vorsteht;
wobei der Basisabschnitt, der Seitenwandabschnitt und der Halsabschnitt ferner mindestens ein erstes extrudiertes Polymer umfassen, das Festphasen-PET umfasst.

5. Kunststoffbehälter nach Anspruch 4, wobei der Behälter ferner ein zweites extrudiertes Polymer umfasst, das Festphasen-PET umfasst, und wobei das erste extrudierte Polymer eine Grenzviskosität aufweist, die höher ist als die Grenzviskosität des zweiten extrudierten Polymers.

## Revendications

1. Paraison en PET extrudé, comprenant:
- un premier polymère extrudé comprenant du PET; et
- un deuxième polymère extrudé comprenant du PET;
- dans lequel les premier et deuxième polymères sont co-extrudés et les premier et deuxième polymères extrudés sont dans un état solide,
**caractérisé par le fait que**
- le premier polymère extrudé présente une viscosité intrinsèque qui est supérieure à la viscosité intrinsèque du deuxième polymère extrudé, où le premier polymère extrudé présente une viscosité intrinsèque d'au moins 0,96 et le deuxième polymère extrudé présente une viscosité intrinsèque de moins de 0,85.

2. Paraison selon la revendication 1, dans laquelle le deuxième polymère extrudé comprend du PET recyclé post-consommateur (PCR) ou du PET regranulé.

3. Paraison selon la revendication 1, comportant une ou plusieurs couches de polymère extrudées additionnelles.

4. Récipient en matière plastique recyclable formé à partir de la paraison selon la revendication 1, comprenant:
une partie de base;
une partie de paroi latérale faisant saillie vers le haut depuis la partie de base; et
une partie de col faisant saillie vers le haut depuis la partie de paroi latérale;
dans lequel la partie de base, la partie de paroi latérale et la partie de col comprennent par ailleurs au moins un premier polymère extrudé comprenant du PET à l'état solide.

5. Récipient en plastique selon la revendication 4, dans lequel le récipient comprend par ailleurs un deuxième polymère extrudé comprenant du PET à l'état solide, et dans lequel le premier polymère extrudé présente une viscosité intrinsèque qui est supérieure à la viscosité intrinsèque du deuxième polymère extrudé.
